# FASCICULE DE BREVET EUROPEEN

(11) **EP 2 171 417 B1**
(45) Date de publication et mention de la délivrance du brevet: **16.03.2011**
(21) Numéro de dépôt: 08827118.4
(22) Date de dépôt: 18.07.2008
(51) Int. Cl.: G01M 11/00, G02B 6/42

(54) **DETECTION DE SIGNAL DANS UNE FIBRE OPTIQUE**
SIGNALERKENNUNG IN GLASFASERN
SIGNAL DETECTION IN OPTICAL FIBRE

(30) Priorité: 23.07.2007 FR 0705354
(43) Date de publication de la demande: 07.04.2010
(73) Titulaire: FRANCE TELECOM, 75015 Paris (FR)
(72) Inventeur: ETRILLARD, Jackie, F-22300 Tredrez Locquemeau (FR); COURANT, Jean-Luc, F-22700 Perros Guirec (FR); ROQUES, Michel, F-34190 Moules-Baucels (FR)
(86) Numéro de dépôt international: PCT/FR2008/051359
(87) Numéro de publication internationale: WO 2009/019389

(56) Documents cités:
- EP-A- 0 223 332
- GB-A- 2 177 869
- US-A- 5 708 265
- US-A- 5 781 285
- US-A- 6 094 261

## Description

La présente invention concerne le contrôle de communications par lien optique gérées par des opérateurs de réseaux de télécommunications et en particulier la détection d'un signal optique dans une ligne à fibre optique afin de signaler un défaut de transmission dans la ligne.

Plusieurs techniques de gestion des réseaux de câbles et de fibres optiques coexistent pour permettre aux opérateurs de superviser leurs réseaux, de les maintenir opérationnels de façon optimale et de les faire migrer éventuellement vers des fonctionnalités nouvelles ou des performances plus élevées en termes de débit par exemple. Ces différentes techniques permettent également aux opérateurs de minimiser leurs dépenses de fonctionnement (OPEX) pour maîtriser la productivité de leurs réseaux.

En particulier, la présente invention peut être appliquée aux réseaux d'accès optiques pour des usagers résidentiels ou professionnels. L'invention peut également être utilisée au sein de réseaux de collecte ou de coeur sur des liaisons optiques particulièrement fragilisées par exemple à cause d'un trafic susceptible de subir des interruptions décidées dans les couches autres que la couche physique, ou par une configuration particulière de la couche physique, en présence de travaux de génie civil par exemple sur une artère de communication déterminée. Dans ce cas, l'invention peut constituer une aide supplémentaire à la maintenance.

Des outils de mesure permettent de vérifier le bon état de l'infrastructure de réseaux d'accès optiques passifs PON ("Passive Optical Network" en anglais) du type FTTx, par exemple FTTH ("Fiber To The Home" en anglais) quand une fibre optique s'étend jusqu'au domicile d'un usager, ou FTTB ("Fiber To The Building" en anglais) quand une fibre optique s'étend jusqu'au pied d'un immeuble, ou bien encore FFTCurb (Fiber To The Curb" en anglais) quand une fibre optique est amenée jusqu'à un point de concentration à proximité d'un trottoir ou FTTCab ("Fiber To The Cabinet" en anglais) quand une fibre optique s'arrête à une armoire de sous-répartition.

Plusieurs architectures de réseaux d'accès existent. L'une de ces architectures dite liaison point à point relie deux entités du réseau par une seule liaison par fibre optique et ne dessert qu'un seul terminal d'usager. Une autre architecture dite liaison point à multipoint relie un noeud d'accès du réseau à plusieurs destinataires par l'intermédiaire d'un coupleur optique comportant un port d'entrée et plusieurs ports de sortie desservant respectivement des terminaux d'usager.

L'invention a trait en particulier au contrôle de tous ces types de réseaux d'accès optiques passifs PON.

Le contrôle de ces réseaux d'accès PON est possible à partir d'une routine de mesures utilisant un réflectomètre et une surveillance systématique assistée par logiciels de gestion, de signatures des réseaux d'accès PON enregistrées dans des bases de données communicantes.

Les mesures par réflectométrie et l'enregistrement des données dans des bases de gestion spécifiques sont coûteuses et sont centralisées par l'opérateur et donc sous la responsabilité exclusive de celui-ci. D'autre part, la surveillance systématique nécessite un élément réflectif à ajouter dans l'installation terminale de l'usager et couplé à la ligne optique desservant l'installation terminale, l'élément réflectif introduisant des pertes optiques supplémentaires non négligeables dans la ligne de celui-ci, dégradant la qualité du service offert par la ligne.

Une autre méthode qui est réservée aux agents de maintenance de l'opérateur ou de l'installateur d'un réseau optique passif PON recourt à l'utilisation d'une pince de contrôle spécifique, comme celle décrite dans EP 0 223 332 A2, pour courber légèrement une fibre optique et déterminer la propagation effective d'un signal optique dans la fibre et le sens de propagation du signal optique. La courbure de la fibre optique engendre des pertes de signal dans la section courbée de la fibre. Des détecteurs photovoltaïques alimentés en puissance par des sources d'énergie autonomes, comme des piles, recueillent l'énergie optique associée au signal optique perdu et qui est rayonnée en dehors de la fibre. Des circuits d'amplification contribuent éventuellement à mesurer l'intensité du signal optique perdu.

Cette méthode de mesure par pince de contrôle est coûteuse et réservée à un usage professionnel. La manipulation de la fibre et de la pince de contrôle peut se révéler destructive de la transmission du signal optique dans la fibre si la manipulation de la fibre est entreprise sans les précautions d'usage par un usager novice.

Pour pallier les inconvénients évoqués ci-dessus, la présente invention propose un dispositif de détection d'au moins un signal optique transmis au travers d'une fibre optique, comprenant un moyen pour courber une section de la fibre optique et un détecteur photovoltaïque apte à recevoir, en entrée, une énergie lumineuse extraite de la section courbée et apte à délivrer, en sortie, un courant électrique,
caractérisé en ce que le moyen de commutation a un premier état dans lequel le détecteur photovoltaïque est connecté électriquement au détecteur de courant électrique et dans lequel le détecteur de courant est alimenté électriquement par le moyen de stockage, et un deuxième état dans lequel un port de sortie du détecteur photovoltaïque est connecté électriquement au moyen de stockage de ladite énergie électrique pour alimenter électriquement ledit moyen de stockage.

Le recours à la photodétection d'une énergie lumineuse extraite de la section courbée de la fibre optique qui est à insérer dans une ligne optique à contrôler permet un contrôle non destructif de la présence d'un signal optique propagé dans la ligne optique sans modifier les branchements existants de cette ligne.

Le dispositif de détection objet de l'invention est autonome en énergie électrique et ainsi peu coûteux d'utilisation. Cette autonomie en énergie électrique peut être obtenue par un deuxième état du moyen de commutation dans lequel un port de sortie du détecteur photovoltaïque est connecté électriquement au moyen de stockage de ladite énergie électrique pour alimenter électriquement ledit moyen de stockage. Pour que le moyen de commutation qui peut être sollicité par un unique bouton-poussoir soit relativement simple, bon marché et fiable, le moyen de commutation peut comprendre alors un commutateur et un interrupteur actionnables simultanément, le commutateur ayant un contact mobile relié au détecteur photovoltaïque et des contacts fixes reliés respectivement à une entrée de courant électrique à détecter du détecteur de courant électrique et une borne du moyen de stockage, et l'interrupteur étant relié à des bornes d'alimentation du moyen de stockage et du détecteur de courant. Ainsi le détecteur photovoltaïque tantôt fournit de l'énergie électrique pour charger le moyen de stockage, tel qu'un micro-accumulateur ou un condensateur de stockage, tantôt fournit un courant électrique au détecteur de courant qui peut être alors alimenté par le moyen de stockage.

Selon une autre réalisation appropriée lorsque la puissance du signal optique dans la ligne optique est relativement faible, l'autonomie en énergie électrique du dispositif de détection peut être obtenue lorsque le moyen de stockage comprend un accumulateur apte à être alimenté électriquement par un moyen photosensible, telle qu'une cellule solaire. Le moyen de commutation peut comprendre alors deux interrupteurs actionnables simultanément et reliés respectivement à un port de sortie du détecteur photovoltaïque et une entrée de courant électrique à détecter du détecteur de courant électrique et à des bornes d'alimentation du moyen de stockage et du détecteur de courant.

Pour signaler une transmission normale de signal optique dans une ligne optique à laquelle est reliée la fibre optique du dispositif de détection, un indicateur est connecté électriquement au détecteur de courant électrique et est alimenté électriquement par le moyen de stockage lorsque le moyen de commutation se trouve dans le premier état, et signale normalement une conversion photoélectrique résultant d'une propagation d'un signal optique dans la fibre optique et donc dans la ligne optique.

Le passage de l'un des premier et deuxième états du moyen de commutation vers l'autre peut être réalisé par un moyen simple, tel qu'un bouton-poussoir, ce qui ne requiert aucune qualification particulière de la personne tel qu'un usager ou un agent de maintenance qui doit relever l'information fournie par l'indicateur. A cet égard, le détecteur de courant peut être apte à signaler dans l'indicateur, en tant qu'information à relever, un défaut de propagation d'un signal optique dans la ligne optique à connecter à la fibre optique si le courant électrique apte à être détecté par le détecteur de courant électrique est inférieur à un seuil prédéterminé du détecteur de courant électrique. Par exemple l'indicateur est un afficheur à cristaux liquides pour faiblement consommer de l'énergie électrique emmagasinée par le moyen de stockage.

Selon une première réalisation du dispositif de l'invention, le moyen pour courber peut être fixe et courber simplement en permanence la section de la fibre optique si bien qu'aucune pièce mécanique mobile n'est nécessaire pour capter l'énergie lumineuse extraite de la section courbée de la fibre.

Selon une deuxième réalisation du dispositif de l'invention fatigant moins la fibre optique, le moyen pour courber peut comprendre un moyen mécanique commandé, par exemple du type bouton-poussoir amorti, avec le moyen de commutation et ayant une première position stationnaire pour maintenir la section de fibre optique dans une position non-courbée stationnaire et le moyen de commutation dans ledit premier état, et une deuxième position stationnaire pour maintenir momentanément courbée la section de la fibre optique et le moyen de commutation dans un deuxième état.

Par exemple, l'usager qui a effectué lui-même le relevé de l'information affichée peut renseigner éventuellement son opérateur d'une anomalie constatée sur la ligne optique reliée à son installation, ou le cas échéant incriminer son terminal de communication desservi par la ligne optique en ayant la certitude que le signal optique est transmis à celui-ci. Pour l'opérateur, cette opération évite des interventions intempestives au domicile de l'usager d'un agent de maintenance qualifié mandaté par l'opérateur, par exemple. De plus, le relevé de l'information produite par l'indicateur peut participer à l'établissement rapide d'un diagnostic efficace concernant une anomalie de fonctionnement du service proposé à l'usager client.

Dans le cadre d'un dégroupage, lorsque la ligne optique est incluse dans une boucle locale au moins en partie gérée par un autre opérateur de télécommunications, l'introduction d'un ou plusieurs dispositifs de détection selon l'invention à des endroits appropriés dans la boucle locale facilite la délimitation des responsabilités de chacun des opérateurs partageant une partie des ressources communes à la ligne optique dans laquelle est introduite la fibre optique du dispositif de détection.

De manière à introduire facilement la fibre optique du dispositif de détection dans une ligne optique, le dispositif comprend des moyens pour connecter des extrémités de la fibre optique dans la ligne optique, comme un connecteur de fibres optiques ou un connecteur de fibres optiques à un coupleur ou à un photorécepteur et/ou un photoémetteur.

L'invention a aussi pour objet un procédé de détection d'au moins un signal optique transmis au travers d'une fibre optique, selon lequel lorsqu'une section de la fibre optique est courbée, un détecteur photovoltaïque est apte à recevoir, en entrée, une énergie lumineuse extraite de la section courbée et apte à délivrer, en sortie, un courant électrique. Le procédé est caractérisé en ce qu'il comprend un positionnement d'un moyen de commutation à un premier état pour connecter électriquement le détecteur photovoltaïque à un détecteur de courant électrique et pour alimenter électriquement le détecteur de courant par un moyen de stockage d'une énergie électrique.

Lorsque ladite section de la fibre optique est maintenue courbée en permanence, le moyen de commutation peut être mis momentanément au deuxième état par un moyen mécanique du type bouton-poussoir afin qu'en dehors des périodes de test de propagation du signal optique dans la fibre optique, le détecteur photovoltaïque puisse charger le moyen de stockage d'énergie électrique.

En rapport avec la deuxième réalisation du dispositif, le procédé de détection peut comprendre en outre un maintien momentané de la section de la fibre optique à une position courbée stationnaire tant que le moyen de commutation est un deuxième état, et un retour à une position non-courbée stationnaire de la section de la fibre optique dès que le moyen de commutation est apte à passer du deuxième état au premier état. Dans la deuxième réalisation, le moyen de commutation peut être mis momentanément au deuxième état par un moyen mécanique du type bouton-poussoir amorti afin qu'en dehors des périodes de test de propagation du signal optique dans la fibre optique, le détecteur photovoltaïque ne charge pas le moyen de stockage d'énergie électrique.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans desquels :
- la figure 1 montre schématiquement des pièces mécaniques d'un dispositif de détection de signal optique selon une première réalisation de l'invention ;
- la figure 2 est un bloc-diagramme schématique du circuit électrique du dispositif selon la première réalisation ;
- la figure 3 montre schématiquement des pièces mécaniques d'un dispositif de détection de signal optique selon une deuxième réalisation de l'invention ; et
- la figure 4 est un bloc-diagramme schématique du circuit électrique du dispositif selon la deuxième réalisation.

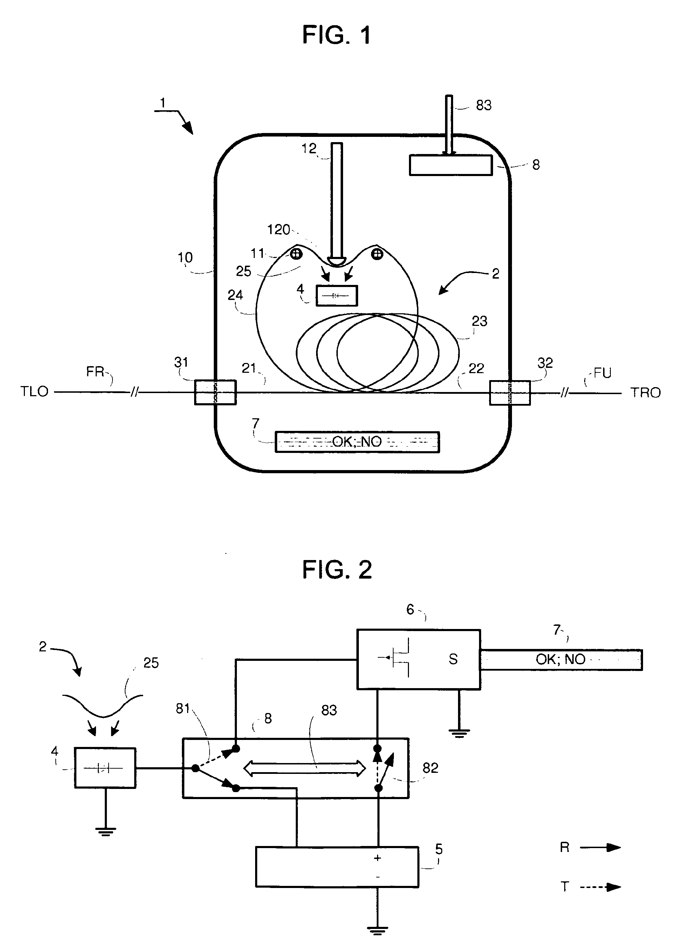

En référence à la figure 1, un dispositif de détection d'au moins un signal optique 1 comprend un boîtier, par exemple en en matière plastique, dont le fond est un support sensiblement plan 10 supportant une fibre optique, des connecteurs, diverses pièces mécaniques et divers composants d'un circuit électrique. Le support 10 est fixé par exemple par des vis sur un plan fixe comme un mur ou un châssis d'équipement comme celui d'une terminaison de réseau optique.

Par exemple, le dispositif 1 est fixé à proximité d'une terminaison de réseau optique TRO qui est installée au domicile d'un usager résidentiel ou au pied d'un bâtiment d'un usager professionnel. La terminaison de réseau optique TRO est située à l'extrémité d'une ligne optique d'usager reliée à un noeud d'accès, tel qu'un terminal de ligne optique TLO d'un réseau d'accès dans un réseau de télécommunications. Par exemple, le réseau d'accès est un réseau optique passif PON ("Passive Optical Network" en anglais) dont l'architecture peut être du type "fibre jusqu'au trottoir" FFTCurb ("Fibre To The Curb" en anglais). Le dispositif 1 peut être placé à la limite du domicile ou du bâtiment de l'usager pour être accessible de l'extérieur par un agent de maintenance de l'opérateur gérant le réseau sans déranger l'usager, ou bien être accessible par l'usager lui-même.

La face du support 10 interne au boîtier est montrée à la figure 1 et supporte une fibre optique de mesure 2 à interconnecter à une fibre optique de réseau FR et une fibre optique d'usager FU par des connecteurs fibre à fibre 31 et 32 fixés sur le support 10. La fibre de réseau FR a une extrémité reliée par exemple au terminal de ligne optique TLO et une autre extrémité aboutée à une première extrémité 21 de la fibre de mesure 2 par le connecteur 31. La fibre d'usager FU a une extrémité reliée par exemple à la terminaison de réseau optique TRO et une autre extrémité aboutée à une deuxième extrémité 22 de la fibre de mesure 2 par le connecteur 32.

En fonctionnement normal, un signal optique modulé par des données à transmettre ou non modulé est propagé dans la ligne optique d'usager FR-FU.

En variante, la ligne optique d'usager ne comprend que la fibre de réseau FR ayant une extrémité aboutée à la première extrémité 21 de la fibre de mesure 2 dans le connecteur 31. Le connecteur fibre à fibre 32 est remplacé par un connecteur pour positionner la deuxième extrémité 22 de la fibre de mesure 2 devant un port optique d'un terminal client.

La fibre optique de mesure 2 est lovée en une ou quelques boucles de réserve 23 et une boucle de mesure 24 maintenues et encadrées de manière connue par des guides sur la face interne du support 10. Les boucles de réserve 23 constituent une longueur de réserve de la fibre optique 2 pour pallier tout raccourcissement éventuel de celle-ci lorsqu'elle est manipulée pour raccorder ses extrémités 21 et 22 aux fibres FR et FU par les connecteurs 31 et 32 et être logée dans le boîtier du dispositif 1.

La boucle de mesure 24 est au moins partiellement dégagée des boucles de réserve 23, comme montré sur la portion supérieure du support 10 à la figure 1. Selon l'invention, la boucle de mesure 24 a une section courbée 25 serpentant et maintenue par sa flexion propre entre deux plots 11 et une pièce d'appui 12 solidaires du support 10. Par exemple, les plots et la pièce d'appui viennent du moulage du support 10 en matière plastique. La pièce d'appui 12 est par exemple une barrette dont l'extrémité 120 est rainurée et arrondie, comme les plots 11, pour guider la boucle de mesure 24 de la fibre optique de mesure 2 sans l'endommager lors de sa courbure et son encastrement entre les plots et la pièce d'appui. L'axe de la pièce d'appui 12 est sensiblement aligné sur la médiatrice entre les plots 11. L'extrémité arrondie 120 de la pièce d'appui n'est pas alignée avec les plots pour que, selon la figure 1, la section courbée 25 de la boucle de mesure 24 ondule au-dessus des plots et au-dessous de l'extrémité arrondie 120 de la pièce d'appui.

Comme montré à la figure 2, le dispositif de détection de signal optique 1 comprend également un circuit électrique supporté par le boîtier et comportant un détecteur photovoltaïque 4, un micro-accumulateur 5, un détecteur de courant 6, un afficheur 7 et un double commutateur 8.

Le double commutateur 8 comprend un premier commutateur 81 dont le contact mobile est relié à un port de sortie du détecteur photovoltaïque 4 et dont les contacts fixes sont reliés respectivement à une entrée de courant à détecter du détecteur de courant 6 et une borne de charge du micro-accumulateur 5. Un deuxième commutateur du double commutateur 8 fait office d'interrupteur 82 entre des bornes d'alimentation en tension du micro-accumulateur 5, d'une part, et du détecteur de courant 6 et de l'afficheur 7, d'autre part. Le commutateur 81 et l'interrupteur 82 ont leurs contacts mobiles déplaçables simultanément par un bouton-poussoir 83 rappelé par ressort à un état de repos et accessible en face avant du boîtier du dispositif 1.

Le détecteur photovoltaïque 4 comporte une ou plusieurs photodiodes et présente une face photosensible placée en regard de la section courbée 25 de la fibre optique 2 et sensible à l'énergie lumineuse extraite de la section courbée. Le détecteur photovoltaïque 4 reçoit de l'énergie lumineuse extraite de la section courbée 25 lorsque celle-ci transmet un signal optique, dans le sens de transmission descendant du signal optique depuis le terminal de ligne optique TLO vers la terminaison de réseau optique TRO, ou dans le sens de transmission montant du signal optique depuis la terminaison de réseau optique TRO vers le terminal de ligne optique TLO.

En position de repos du bouton-poussoir 83, les contacts mobiles du commutateur 81 et de l'interrupteur 82 sont à des états de repos R montrés en traits pleins à la figure 2. L'interrupteur 82 est ouvert et isole électriquement du micro-accumulateur 5 le détecteur de courant 6 et l'afficheur 7 qui ne sont pas alimentés. Le détecteur photovoltaïque 4 fournit, alors, un courant électrique au micro-accumulateur 5 à travers le commutateur 81. Le détecteur photovoltaïque 4 capte de l'énergie lumineuse extraite de la section courbée 25 de la fibre optique 2 lorsque celle-ci propage un signal optique, et convertit l'énergie lumineuse en un courant électrique chargeant le micro-accumulateur 5.

Le dispositif de détection de signal optique 1 selon l'invention repose sur le principe qu'une section 25 de la fibre optique 2 qui est courbée sous l'effet d'une contrainte mécanique extérieure produite par la pression de la pièce d'appui 12 entre les plots 11, rayonne par diffraction une petite partie de l'énergie lumineuse d'un signal optique se propageant dans la fibre. Le rayon et l'angle du secteur de la section courbée 25 appliquée contre l'extrémité arrondie 120 de la pièce d'appui 12 sont déterminés de la manière suivante. Le rayon de la section courbée par exemple de l'ordre de 5 à 30 mm est supérieur au rayon de courbure minimum de la fibre optique 2 en deçà duquel la section courbée serait le siège de microfissure et les caractéristiques de propagation de la fibre ne seraient plus conservées. Le rayon et l'angle du secteur de la section courbée 25 sont suffisants pour rayonner une quantité d'énergie lumineuse pouvant être captée par le détecteur photovoltaïque 4 et convertie en un courant électrique détectable par le détecteur de courant 6.

Le détecteur photovoltaïque 4 est sensible au spectre du signal optique utile dans la fibre 2 pour alimenter le micro-accumulateur 5 en permanence sauf au moment de la mesure du courant lorsque le double commutateur 8 est à un état de travail T, comme on le verra ci-après. Le spectre du signal optique utile recouvre par exemple une plage autour d'une longueur d'onde de 1300 nm ou 1550 nm. Plus la longueur d'onde est grande, plus l'affaiblissement et donc les pertes dus à la section courbée 25 sont élevés. Le rayon de la section courbée 25 peut donc être d'autant plus petit que la longueur d'onde du signal optique est petite. La section courbée n'est pas nécessairement circulaire et le secteur de celle-ci est par exemple supérieur à 90° environ. La détectivité du détecteur photovoltaïque 4 est très élevée. Par exemple, quelques pour-cent de l'intensité lumineuse d'un signal optique propagé dans la fibre 2 captés par le détecteur photovoltaïque 4 sont suffisants pour activer le détecteur de courant 6.

Le micro-accumulateur 5 accumule de l'énergie pendant de longues périodes de fonctionnement normal de la ligne optique d'usager FR-FU pour lesquelles le bouton-poussoir 83 n'est pas enfoncé, le commutateur 8 étant à l'état de repos R, et la fibre optique 2 étant parcourue par un signal optique utile. L'énergie électrique accumulée et ainsi stockée sert à alimenter le détecteur de courant 6 et l'afficheur 7 pour vérifier la présence d'un flux optique dans la fibre 2 et rend autonome en énergie le dispositif 1. La valeur de la tension électrique fournie par le micro-accumulateur 5 est déterminée par les caractéristiques des composants électroniques 6 et 7 à alimenter.

Le procédé selon l'invention pour détecter un signal optique susceptible d'être propagé dans la fibre optique de mesure 2 et dont une énergie lumineuse extraite vers l'extérieur est destinée à être captée par le détecteur photovoltaïque 4 dans le dispositif de détection de signal optique 1 comprend les étapes suivantes en se référant aux figures 1 et 2.

Le dispositif 1 peut être préparé en usine et installé en chantier prêt à l'emploi, avec la fibre optique de mesure 2 préalablement lovée et maintenue en des boucles de réserve 23 et une boucle de mesure 24 avec une section courbée 25 entre les plots 11 et la pièce d'appui 12. En usine, les extrémités 21 et 22 de la fibre 2 peuvent être préalablement enserrées dans les connecteurs 31 et 32, et le micro-accumulateur 5 peut être préalablement chargé.

Le support 10 servant de fond au boîtier du dispositif 1 est fixé contre un mur, ou adossé à un équipement de l'opérateur gérant la ligne optique FR-FU dans laquelle la propagation d'un signal optique est à contrôler.

Préalablement, la fibre optique 2 est interconnectée dans la ligne optique FR-FU en insérant une extrémité de la fibre optique de réseau FR dans le connecteur 31 pour la connecter à la première extrémité 21 de la fibre 2 et en insérant une extrémité de la fibre optique d'usager FU dans le connecteur 32 pour la connecter à la deuxième extrémité 22 de la fibre 2.

Le boîtier du dispositif est refermé et prêt à l'emploi. Le bouton-poussoir 83 est au repos et le double commutateur 8 est positionné à l'état de repos R. La transmission d'un signal optique dans la ligne optique FR-FU au cours de son exploitation normale engendre en permanence une énergie lumineuse perdue par la section courbée 25 de la fibre 2 qui est captée par le détecteur photovoltaïque 4 et convertie en courant électrique pour charger le micro-accumulateur 5.

Ultérieurement, par exemple à la suite d'une anomalie de réception de signal de données dans l'installation terminale de l'usager reliée à la fibre optique FU via la terminaison TRO, l'opérateur demande à l'usager de tester la ligne optique FR-FU au moyen du dispositif 1.

L'usager presse alors le bouton-poussoir 83 à l'encontre d'un ressort de rappel ce qui positionne le double commutateur à l'état de travail T. Les contacts mobiles du commutateur 81 et de l'interrupteur 82 passent ainsi simultanément des états de repos R aux états de travail T montrés en traits pointillés à la figure 2. L'interrupteur 82 est fermé et le détecteur de courant 6 et l'afficheur 7 sont alimentés par le micro-accumulateur 5 et donc "opto-alimentés" en différé par le détecteur photovoltaïque 4. Le détecteur photovoltaïque 4 est isolé électriquement du micro-accumulateur 5 et relié à l'entrée de courant du détecteur de courant 6 à travers le commutateur 81. Le détecteur photovoltaïque 4 convertit l'énergie lumineuse captée en un courant électrique à détecter par le détecteur de courant 6.

Afin que le circuit de mesure comprenant le détecteur de courant 6 et l'afficheur 7 consomme très peu d'énergie électrique et soit de faible coût, le détecteur de courant est structuré par exemple autour d'un transistor à effet de champ à très forte impédance d'entrée afin de faire office d'adaptateur d'impédance indépendamment des fluctuations de tension de sortie du détecteur photovoltaïque, et l'afficheur est à cristaux liquides. Pour minimiser les coûts de maintenance du dispositif 1, les composants 4 à 8 sont qualifiés en termes de durée de vie pour optimiser l'usage du dispositif pendant plusieurs années sans maintenance.

Si le courant électrique détecté par le détecteur 6 a une intensité supérieure ou égale à un seuil prédéterminé S, il résulte de la conversion photoélectrique de l'énergie lumineuse extraite la section courbée 25 de la fibre optique 2 due à la présence d'un signal optique propagé normalement dans la fibre optique 2. Le détecteur 6 commande à l'afficheur 7 l'affichage d'une information, comme par exemple "OK", qui est courte afin de ne consommer que peu d'énergie électrique fournie par le micro-accumulateur 5.

Si le courant électrique détecté par le détecteur 6 a une intensité inférieure au seuil prédéterminé S ou nulle, le détecteur 6 commande à l'afficheur 7 un affichage d'une autre information, comme par exemple "NO". Cette autre information signifie que quasiment aucun signal optique n'est propagé dans la fibre optique 2 et qu'un défaut de propagation de signal optique tel qu'une microfissure atténuant considérablement le signal optique ou une coupure interrompant le signal optique existe dans la ligne optique FR-FU.

Lorsque l'usager relâche le bouton-poussoir 83 qui revient au repos sous l'effet du ressort de rappel, les contacts mobiles du commutateur 81 et de l'interrupteur 82 passent simultanément des états de travail T aux états de repos R et le détecteur photovoltaïque 4 fonctionne à nouveau en détecteur photovoltaïque pour charger le micro-accumulateur 5 si de l'énergie lumineuse est rayonnée par la section courbée 25 de la fibre 2.

L'usager transmet ensuite l'information lue sur l'afficheur 7 à l'opérateur. Le dispositif 1 signale ainsi une présence ou une absence du signal optique dans la fibre optique 2 et donc dans la ligne optique d'usager FR-FU sans indiquer de valeur d'intensité du signal optique.

En variante, l'afficheur 7 peut être remplacé par tout autre type d'indicateur à très faible consommation électrique, tel qu'un voyant du type diode électroluminescente qui s'illumine en vert et en rouge respectivement en remplacement des affichages "OK" et "NO" précédents, ou un petit buzzer qui produit un son en remplacement de l'affichage "OK" précédent.

Le circuit électrique 4 - 8 dans le dispositif 1 peut être étalonné pour donner une information sur la valeur de l'intensité du signal optique et donc permettre de connaître la classe de la ligne optique d'usager FR-FU définie suivant les recommandations ITU-T (International Telecommunications Union-Telecommunications). La valeur du courant de charge appliqué par le port de sortie du détecteur photovoltaïque 4 au micro-accumulateur 5 à travers le commutateur 81 au repos R est mesurée pour étalonner la valeur moyenne de l'intensité du signal optique présent dans la fibre optique 2.

En variante, l'accumulateur est alimenté par une cellule solaire extérieure dans le cas d'un signal optique dont la puissance est trop faible pour permettre une opto-alimentation de l'accumulateur. Dans cette variante, le commutateur 81 fait office d'interrupteur entre le détecteur photovoltaïque 4 et le détecteur de courant 6, et le détecteur photovoltaïque 4 n'est connecté électriquement au détecteur de courant que lors de la mesure de courant.

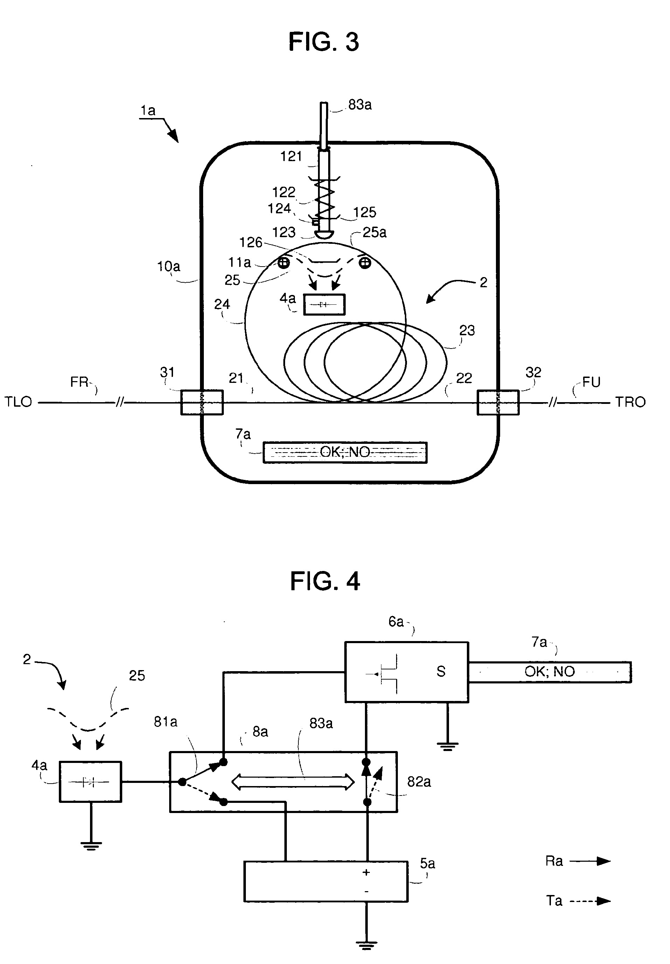

En se référant maintenant à la deuxième réalisation montrée aux figures 3 et 4, le dispositif de détection de signal optique la diffère de celui 1 montré aux figures 1 et 2 par un actionneur mécanique monté sur le support 10a et remplaçant la pièce d'appui fixe 12.

L'actionneur mécanique comprend par exemple une tige 121 pouvant coulisser et tourner dans une glissière ménagée sur le support 10a du boîtier sensiblement le long de la médiatrice entre les plots 11, et un mécanisme de rappel comprenant un ressort de rappel 122. Au lieu d'être amorti mécaniquement, le mécanisme de rappel peut être amorti par un dispositif hydraulique. Une extrémité 123 de la tige 121 est rainurée et arrondie comme l'extrémité 120 de la pièce d'appui 12 pour pousser une section initialement convexe 25a de la boucle de mesure 24 de la fibre optique 2 en une section courbée 25. La tige comporte un ergot 124 qui coopère avec deux butées 125 et 126 sur le support 10a pour limiter la course de la tige entre deux positions stationnaires. D'une part, l'ergot 124 est adapté à buter contre la première butée 125 sous l'effet de la force de rappel du ressort 122. D'autre part, l'ergot 124 est adapté à être bloqué par rotation de la tige contre la deuxième butée 126 lorsque la tige est glissée à l'encontre de la force exercée par le ressort de rappel 122 pour déformer partiellement la fibre 2 en la section courbée 25 et détecter un flux lumineux rayonné par la section courbée. La boucle de mesure 24 de la fibre optique 2 n'est pas en courbure accentuée permanente comme à la figure 1 et donc ne présente pas de perte lumineuse permanente.

Une autre extrémité de la tige 121 sert de bouton-poussoir 83a et coopère avec les contacts mobiles du commutateur 81a et de l'interrupteur 82a. L'actionneur est commandé simultanément avec le double commutateur 8a à des positions stationnaires de repos Ra et de travail Ta par le bouton-poussoir 83a.

Au repos, le bouton-poussoir 83a n'est pas enfoncé et le ressort 122 rappelle l'ergot 124 de la tige 121 contre la première butée 125, vers le haut dans la figure 3, afin que l'extrémité arrondie 123 soit sensiblement en retrait devant la section initialement convexe 25a de la boucle de mesure 24. Les contacts mobiles du commutateur 81a et de l'interrupteur 82a sont aux états de repos Ra montrés en traits pleins à la figure 4. L'interrupteur 82a est fermé et le détecteur de courant 6a et l'afficheur 7a sont alimentés par le micro-accumulateur 5a. Le détecteur photovoltaïque 4a est isolé électriquement du micro-accumulateur 5a et relié à l'entrée de courant du détecteur de courant 6a à travers le commutateur 81a.

A la demande de l'opérateur, le bouton-poussoir 83a est soumis à une première pression par exemple par l'usager. La tige 121 est enfoncée avec une sensible rotation à l'encontre de la force de rappel du ressort 122 et est maintenue enfoncée pendant quelques secondes, vers le bas selon la figure 3, en bloquant l'ergot 124 de la tige 121 sous la deuxième butée 126. La poussée exercée par l'extrémité arrondie 123 de la tige 121 sur la section initialement convexe 25a contraint celle-ci à s'incurver en la section courbée 25 entre les plots 11a. Les contacts mobiles du commutateur 81a et de l'interrupteur 82a sont maintenus momentanément aux états de travail Ta montrés en traits pointillés à la figure 4. L'interrupteur 82a est ouvert et isole électriquement le micro-accumulateur 5a du détecteur de courant 6a et de l'afficheur 7a. Si un signal optique utile est normalement propagé dans la section courbée 25 de la fibre optique 2, le détecteur photovoltaïque 4a capte de l'énergie lumineuse de la section courbée 25 qu'il restitue sous forme de courant électrique de charge au micro-accumulateur 5a à travers le commutateur 81a.

Le maintien enfoncé du bouton-poussoir 83a pendant quelques secondes permet au micro-accumulateur 5a d'emmagasiner suffisamment d'énergie électrique pour alimenter brièvement le détecteur de courant 6a et l'afficheur 7a lorsque le bouton-poussoir 83a subit une deuxième pression pour dégager l'ergot 124 de la tige 121 du dessous de la butée 126 et est relâché pour revenir au repos sous la contrainte exercée par le ressort de rappel 122. Dès le début de la course de retour de la tige 121, l'interrupteur 82a est fermé et rétablit le contact électrique rompu pour que le micro-accumulateur 5a alimente le détecteur de courant 6a et l'afficheur 7a. Le détecteur photovoltaïque 4a capte instantanément de l'énergie lumineuse extraite de la section encore courbée 25 et produit un courant détecté par le détecteur 6a si l'intensité du courant produit est supérieure ou égal au seuil S ; dans ce cas l'afficheur 7a indique "OK". Si l'intensité du courant produit est inférieure au seuil S ou nul, l'afficheur 7a indique par "NO" qu'aucun signal optique n'est quasiment propagé dans la fibre optique 2 et qu'un défaut existe dans la ligne optique d'usager FR-FU. L'extrémité arrondie 123 de la tige 121 libère la section courbée 25 qui revient naturellement à la position non-courbée de la section initialement convexe 25a de la fibre 2.

La courbure de la section courbée 25 de la fibre 2 peut être plus accentuée que dans la première réalisation pour disposer de davantage de puissance optique captée par le détecteur photovoltaïque 4a. Par contre, les pertes à l'état de repos Ra sont quasiment nulles en dehors de la brève période de détection de courant.

Selon une variante de la deuxième réalisation, le micro-accumulateur 5a est remplacé par un condensateur de stockage qui se charge plus rapidement que le micro-accumulateur. Bien que l'énergie disponible restituée par le condensateur de stockage au détecteur de courant 6a et à l'afficheur 7a soit inférieure à celle susceptible d'être chargée dans le micro-accumulateur, le condensateur permet de les alimenter pour détecter un courant photovoltaïque.

## Revendications

1. Dispositif de détection d'au moins un signal optique transmis au travers d'une fibre optique (2), comprenant un moyen (11, 12) pour courber une section (25) de la fibre optique, un détecteur photovoltaïque (4) apte à recevoir, en entrée, une énergie lumineuse extraite de la section courbée et apte à délivrer, en sortie, un courant électrique, un moyen de stockage d'une énergie électrique (5), un détecteur de courant électrique (6), et un moyen de commutation (8),
**caractérisé en ce que** le moyen de commutation a un premier état (T) dans lequel le détecteur photovoltaïque est connecté électriquement au détecteur de courant électrique et dans lequel le détecteur de courant est alimenté électriquement par le moyen de stockage, et un deuxième état (R) dans lequel un port de sortie du détecteur photovoltaïque (4) est connecté électriquement au moyen de stockage de ladite énergie électrique pour alimenter électriquement ledit moyen de stockage.

2. Dispositif conforme à la revendication 1, dans lequel le moyen de commutation comprend un commutateur (81) et un interrupteur (82) actionnables simultanément, le commutateur (81) ayant un contact mobile relié au détecteur photovoltaïque (4) et des contacts fixes reliés respectivement à une entrée de courant électrique à détecter du détecteur de courant électrique (6) et une borne du moyen de stockage (5), et l'interrupteur (82) étant relié à des bornes d'alimentation du moyen de stockage et du détecteur de courant (6).

3. Dispositif conforme à la revendication 1, **caractérisé en ce qu'**il comporte un indicateur (7) connecté électriquement au détecteur de courant électrique (6) et **en ce que** lorsque le moyen de commutation (8) se trouve dans le premier état, ledit indicateur est alimenté électriquement par le moyen de stockage.

4. Dispositif conforme à la revendication 3, dans lequel lorsque le courant électrique apte à être détecté par le détecteur de courant électrique (6) est inférieur à un seuil de détection prédéterminé du détecteur de courant électrique (6), l'indicateur (7) signale un défaut de propagation de signal optique dans une ligne optique (FR-FU) à connecter à la fibre optique (2).

5. Dispositif conforme à l'une quelconque des revendications 1 à 4, dans lequel le moyen pour courber (11, 12) est fixe et courbe en permanence la section (25) de la fibre optique.

6. Dispositif conforme à la revendication 1, dans lequel le moyen pour courber comprend un moyen mécanique (121, 122, 83a) commandé avec le moyen de commutation (8a) et ayant une première position stationnaire pour maintenir la section de fibre optique dans une position non-courbée stationnaire et le moyen de commutation dans ledit premier état (Ra), et une deuxième position stationnaire pour maintenir momentanément courbée la section (25) de la fibre optique (2a) et le moyen de commutation dans un deuxième état (Ta).

7. Procédé de détection d'au moins un signal optique transmis au travers d'une fibre optique (2), selon lequel lorsqu'une section (25) de la fibre optique est courbée, un détecteur photovoltaïque (4) est apte à recevoir, en entrée, une énergie lumineuse extraite de la section courbée et apte à délivrer, en sortie, un courant électrique,
**caractérisé en ce qu'**il comprend un positionnement d'un moyen de commutation (8) à un premier état (T) pour connecter électriquement le détecteur photovoltaïque à un détecteur de courant électrique (6) et pour alimenter électriquement le détecteur de courant par un moyen de stockage d'une énergie électrique (5), et un positionnement du moyen de commutation à un deuxième état (R) dans lequel un port de sortie du détecteur photovoltaïque (4) est connecté électriquement au moyen de stockage de ladite énergie électrique pour alimenter électriquement ledit moyen de stockage.

8. Procédé conforme à la revendication 7, selon lequel le moyen de commutation (8) est mis momentanément au premier état (T) par un moyen mécanique du type bouton-poussoir (83).

9. Procédé conforme à la revendication 7, comprenant un maintien momentané de la section (25a) de la fibre optique (2) à une position courbée stationnaire (25) tant que le moyen de commutation (8a) est au deuxième état (Ta), et un retour à une position non-courbée stationnaire de la section (25) de la fibre optique (2) dès que le moyen de commutation (8a) est apte à passer du deuxième état (Ta) au premier état (Ra).

10. Procédé conforme à la revendication 11, selon lequel le moyen de commutation est mis momentanément au deuxième état (Ta) par un moyen mécanique du type bouton-poussoir amorti (121, 122, 83a).

## Claims

1. Device for detecting at least one optical signal transmitted through an optical fibre (2), comprising a means (11, 12) for curving a section (25) of the optical fibre, a photovoltaic detector (4) able to receive, as input, a luminous energy extracted from the curved section and able to deliver, as output, an electrical current, a means for storing an electrical energy (5), an electrical current detector (6), and a switching means (8),
**characterized in that** the switching means has a first state (T) in which the photovoltaic detector is connected electrically to the electrical current detector and in which the current detector is supplied electrically by the storage means, and a second state (R) in which an output port of the photovoltaic detector (4) is connected electrically to the means for storing said electrical energy so as to electrically supply said storage means.

2. Device in accordance with Claim 1, in which the switching means comprises a switch (81) and a breaker (82) which can be actuated simultaneously, the switch (81) having a movable contact linked to the photovoltaic detector (4) and fixed contacts linked respectively to an input for electrical current to be detected of the electrical current detector (6) and a terminal of the storage means (5), and the breaker (82) being linked to power supply terminals of the storage means and of the current detector (6).

3. Device in accordance with Claim 1, **characterized in that** it comprises an indicator (7) connected electrically to the electrical current detector (6) and **in that** when the switching means (8) is in the first state, said indicator is supplied electrically by the storage means.

4. Device in accordance with Claim 3, in which when the electrical current able to be detected by the electrical current detector (6) is below a predetermined detection threshold of the electrical current detector (6), the indicator (7) signals a defect of optical signal propagation in an optical line (FR-FU) to be connected to the optical fibre (2).

5. Device in accordance with any one of Claims 1 to 4, in which the means for curving (11, 12) is fixed and permanently curves the section (25) of the optical fibre.

6. Device in accordance with Claim 1, in which the means for curving comprises a mechanical means (121, 122, 83a) controlled with the switching means (8a) and having a first stationary position to maintain the optical fibre section in a stationary non-curved position and the switching means in said first state (Ra), and a second stationary position to maintain momentarily curved the section (25) of the optical fibre (2a) and the switching means in a second state (Ta).

7. Method for detecting at least one optical signal transmitted through an optical fibre (2), according to which when a section (25) of the optical fibre is curved, a photovoltaic detector (4) is able to receive, as input, a luminous energy extracted from the curved section and able to deliver, as output, an electrical current,
**characterized in that** it comprises a positioning of a switching means (8) in a first state (T) so as to electrically connect the photovoltaic detector to an electrical current detector (6) and to electrically supply the current detector by a means for storing an electrical energy (5), and a positioning of the switching means in a second state (R) in which an output port of the photovoltaic detector (4) is connected electrically to the means for storing said electrical energy so as to electrically supply said storage means.

8. Method in accordance with Claim 7, according to which the switching means (8) is placed momentarily in the first state (T) by a mechanical means of the push-button type (83).

9. Method in accordance with Claim 7, comprising a momentary maintaining of the section (25a) of the optical fibre (2) in a stationary curved position (25) as long as the switching means (8a) is in the second state (Ta), and a return to a stationary non-curved position of the section (25) of the optical fibre (2) as soon as the switching means (8a) is able to pass from the second state (Ta) to the first state (Ra).

10. Method in accordance with Claim 9, according to which the switching means is placed momentarily in the second state (Ta) by a mechanical means of the damped push-button type (121, 122, 83a).

## Patentansprüche

1. Vorrichtung zur Erfassung mindestens eines über eine Lichtleitfaser (2) übertragenen optischen Signals, mit einer Einrichtung (11, 12) um einen Abschnitt (25) der Lichtleitfaser zu biegen, mit einem photovoltaischen Detektor (4), der am Eingang eine aus dem gebogenen Abschnitt entnommene Lichtenergie empfangen und am Ausgang einen elektrischen Strom liefern kann, mit einer Einrichtung zum Speichern einer elektrischen Energie (5), mit einem elektrischen Stromdetektor (6) und mit einer Umschalteinrichtung (8),
**dadurch gekennzeichnet, dass** die Umschalteinrichtung einen ersten Zustand (T), in dem der photovoltaische Detektor mit dem elektrischen Stromdetektor elektrisch verbunden ist und in dem der Stromdetektor von der Speichereinrichtung mit Strom versorgt wird, und einen zweiten Zustand (R) hat, in dem ein Ausgangsport des photovoltaischen Detektors (4) mit der Speichereinrichtung der elektrischen Energie elektrisch verbunden ist, um die Speichereinrichtung mit Strom zu versorgen.

2. Vorrichtung nach Anspruch 1, bei der die Umschalteinrichtung einen Umschalter (81) und einen Unterbrecher (82) enthält, die gleichzeitig betätigbar sind, wobei der Umschalter (81) einen beweglichen Kontakt, der mit dem photovoltaischen Detektor (4) verbunden ist, und feste Kontakte hat, die mit einem Eingang von zu erfassendem elektrischen Strom des elektrischen Stromdetektors (6) bzw. mit einer Klemme der Speichereinrichtung (5) verbunden sind, und der Unterbrecher (82) mit Speiseklemmen der Speichereinrichtung und des Stromdetektors (6) verbunden ist.

3. Vorrichtung nach Anspruch 1, **dadurch gekennzeichnet, dass** sie einen Anzeiger (7) aufweist, der mit dem elektrischen Stromdetektor (6) elektrisch verbunden ist, und dass, wenn die Umschalteinrichtung (8) sich in dem ersten Zustand befindet, der Anzeiger von der Speichereinrichtung mit Strom versorgt wird.

4. Vorrichtung nach Anspruch 3, bei der, wenn der elektrische Strom, der vom elektrischen Stromdetektor (6) erfasst werden kann, geringer als eine vorbestimmte Erfassungsschwelle des elektrischen Stromdetektors (6) ist, der Anzeiger (7) einen Ausbreitungsfehler eines optischen Signals in einer optischen Leitung (FR-FU) anzeigt, die mit der Lichtleitfaser (2) verbunden werden soll.

5. Vorrichtung nach einem der Ansprüche 1 bis 4, bei der die Biegeeinrichtung (11, 12) fest ist und den Abschnitt (25) der Lichtleitfaser permanent biegt.

6. Vorrichtung nach Anspruch 1, bei der die Biegeeinrichtung eine mechanische Einrichtung (121, 122, 83a) enthält, die mit der Umschalteinrichtung (8a) gesteuert wird und eine erste ortsfeste Stellung hat, um den Lichtleitfaserabschnitt in einer ortsfesten, nicht gebogenen Stellung und die Umschalteinrichtung im ersten Zustand (Ra) zu halten, und eine zweite ortsfeste Stellung hat, um den Abschnitt (25) der Lichtleitfaser (2a) momentan gebogen und die Umschalteinrichtung in einem zweiten Zustand (Ta) zu halten.

7. Verfahren zur Erfassung mindestens eines optischen Signals, das über eine Lichtleitfaser (2) übertragen wird, gemäß dem, wenn ein Abschnitt (25) der Lichtleitfaser gebogen ist, ein photovoltaischer Detektor (4) am Eingang eine aus dem gebogenen Abschnitt entnommene Lichtenergie empfangen und am Ausgang einen elektrischen Strom liefern kann,
**dadurch gekennzeichnet, dass** es eine Positionierung einer Umschalteinrichtung (8) in einem ersten Zustand (T), um den photovoltaischen Detektor mit einem elektrischen Stromdetektor (6) elektrisch zu verbinden und um den Stromdetektor durch eine Speichereinrichtung einer elektrischen Energie (5) mit Strom zu versorgen, und eine Positionierung der Umschalteinrichtung in einem zweiten Zustand (R) enthält, in dem ein Ausgangsport des photovoltaischen Detektors (4) mit der Speichereinrichtung der elektrischen Energie elektrisch verbunden ist, um die Speichereinrichtung mit Strom zu versorgen.

8. Verfahren nach Anspruch 7, gemäß dem die Umschalteinrichtung (8) von einer mechanischen Einrichtung der Art Druckknopf (83) momentan in den ersten Zustand (T) versetzt wird.

9. Verfahren nach Anspruch 7, das einen momentanen Halt des Abschnitts (25a) der Lichtleitfaser (2) in einer ortsfesten gebogenen Stellung (25), so lange die Umschalteinrichtung (8a) im zweiten Zustand (Ta) ist, und eine Rückkehr in eine ortsfeste, nicht gebogene Stellung des Abschnitts (25) der Lichtleitfaser (2) enthält, sobald die Umschalteinrichtung (8a) vom zweiten Zustand (Ta) in den ersten Zustand (Ra) übergehen kann.

10. Verfahren nach Anspruch 9, gemäß dem die Umschalteinrichtung von einer mechanischen Einrichtung der Art gedämpfter Druckknopf (121, 122, 83a) momentan in den zweiten Zustand (Ta) versetzt wird.
